# EUROPÄISCHE PATENTSCHRIFT

(11) **EP 3 895 834 B1**
(45) Veröffentlichungstag und Bekanntmachung des Hinweises auf die Patenterteilung: **05.07.2023**
(21) Anmeldenummer: 21155357.3
(22) Anmeldetag: 05.02.2021
(51) Int. Cl.: B23K 11/11, B23K 11/30, G05B 23/02, B23K 31/00, B23K 101/00

(54) **VERFAHREN UND STEUEREINHEIT ZUM WIDERSTANDSSCHWEISSEN**
METHOD AND CONTROL UNIT FOR RESISTANCE WELDING
PROCÉDÉ ET UNITÉ DE COMMANDE DESTINÉ AU SOUDAGE PAR RÉSISTANCE

(30) Priorität: 14.04.2020 DE 102020204671
(43) Veröffentlichungstag der Anmeldung: 20.10.2021
(73) Patentinhaber: Robert Bosch GmbH, 70442 Stuttgart (DE)
(72) Erfinder: Mcconnell, Sean, 69434 Hirschhorn Am Neckar (DE); Pychynski, Tim, 76137 Karlsruhe (DE); Slavnic, Sinisa, 28357 Bremen (DE); Zhou, Baifan, 71229 Leonberg (DE); Bleier, Fabian, 70180 Stuttgart (DE); Dieterle, Martin, 71636 Ludwigsburg (DE); Shakirov, Damir, 75223 Niefern-Oeschelbronn (DE); Haeufgloeckner, Juergen, 63936 Schneeberg (DE)

(56) Entgegenhaltungen:
- EP-A1- 3 412 397
- DE-A1- 10 117 854
- DE-T2- 69 620 365
- DE-U1-212014 000 102
- JP-A- 2007 283 328
- US-A1- 2017 032 281
- US-B2- 6 506 997

## Beschreibung

Die vorliegende Erfindung betrifft ein Verfahren zum Widerstandsschweißen sowie eine Steuereinheit, ein Schweißgerät, ein Computerprogramm zu dessen Durchführung und ein maschinenlesbares Speichermedium mit dem darauf gespeicherten Computerprogramm.

### Stand der Technik

Mittels Schweißprozessen wie beispielsweise dem Widerstandsschweißen können Werkstücke stoffschlüssig miteinander verbunden werden. Beispielsweise werden im Zuge des automatisierten Karosserierohbaus durch robotergeführte Schweißzangen unterschiedliche Werkstücke, z.B. Bleche, mittels Widerstandsschweißen miteinander verschweißt.

Im Zuge des Widerstandsschweißens werden zunächst im Zuge einer sog. Kraftaufbauphase zwei Schweißelektroden einer Schweißzange mit Hilfe eines Elektrodenantriebs gegen einen Schweißpunkt der Werkstücke gepresst, bis eine vorgegebene Elektrodenkraft erreicht ist. Anschließend erfolgt der eigentliche Schweißprozess, im Zuge dessen die Schweißelektroden für die Dauer einer Schweißzeit mit einem Schweißstrom bestromt werden, wodurch eine Widerstandserwärmung der beiden zu verschweißenden Werkstücke zwischen den Schweißelektroden erfolgt und die Werkstücke bis zum Erreichen einer erforderlichen Schweißtemperatur erhitzt werden.

In der EP 3 412 397 A1 wird mittels eines Klassifikationsmodells eine Wahrscheinlichkeit für das Auftreten eines Schweißspritzers bestimmt. Die JP 2007 283328 A beschreibt ein Widerstandsschweißverfahren, bei dem das Auftreten von Schweißspritzern vorhergesagt wird. Die US 2017/0032281 A1 beschreibt ein System zum Verarbeiten von Schweißdaten, die von Schweißsystemen gesammelt werden.

Die DE 696 20 365 T2 betrifft eine Steuereinrichtung für eine Widerstandsschweißvorrichtung mit einem Schweißstromdetektionsmittel zur Detektion eines Schweißstromes; einem Detektionsmittel für eine Zwischenelektrodenspannung zur Detektion einer Zwischenelektrodenspannung; einem Berechnungsmittel zum Schätzen einer Wahrscheinlichkeit einer Ausstoß- und Oberflächengratbildung durch Schätzen der Energieverteilung auf Grundlage des Schweißstromes und der Zwischenelektrodenspannung und zum Vergleichen der geschätzten Energieverteilung mit einer vorgegebenen Tabelle der Wahrscheinlichkeit einer Ausstoß- und Oberflächengratbildung; und einem Steuermittel zur Steuerung des Schweißstromes, so dass die Wahrscheinlichkeit der Ausstoß- und Oberflächengratbildung auf einen vorbestimmten Wert eingestellt werden kann.

Die DE 21 2014 000 102 U1 beschreibt Systeme zum Bereitstellen einer Kontaktspitze-Werkstück-Distanz (CTWD)-Rückmeldung für erweiterte Realität.

Die DE 101 17 854 A1 betrifft Verfahren und Vorrichtungen zur Erfassung der Qualität und zur Steuerung und Regelung von Pressschweiß- und Schmelzschweißprozessen.

Die US 6 506 997 B2 offenbart Verfahren und Vorrichtungen zur Überwachung der Prozessbedingungen beim Widerstandspunktschweißen in Echtzeit, indem Schweißdaten in einem Energiebilanzmodell in integraler Form verwendet werden, um die mittlere Schweißtemperatur zu schätzen und Prozessbedingungen wie das Auftreten von Spritzern und den Schweißdurchmesser vorherzusagen.

### Offenbarung der Erfindung

Vor diesem Hintergrund werden ein Verfahren zum Widerstandsschweißen sowie eine Steuereinheit, ein Schweißgerät, ein Computerprogramm zu dessen Durchführung und ein maschinenlesbares Speichermedium mit dem darauf gespeicherten Computerprogramm mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung bedient sich der Maßnahme, mittels Regressionsanalyse von Schweißdaten bereits durchgeführter Schweißprozesse für einen nächsten Schweißprozess Wahrscheinlichkeit und Zeitpunkt des Auftretens eines Schweißspritzers vorherzusagen und wenigstens einen Zusammenhang zwischen der Wahrscheinlichkeit bzw. dem Zeitpunkt und Schweißparametern zu bestimmen, und anhand des Zusammenhangs die Schweißparameter so anzupassen, dass der vorhergesagte Schweißspritzer verhindert wird.

Im Rahmen der Erfindung werden Schweißprozesse durchgeführt, im Zuge derer jeweils gemäß vorgegebenen Schweißparametern Schweißelektroden gegen einen Schweißpunkt von Werkstücken gepresst und mit einem Schweißstrom bestromt werden. Somit wird im Zuge jedes dieser Schweißprozesse jeweils ein Schweißpunkt geschweißt.

Die Schweißparameter stellen insbesondere vorgegebene Soll-Werte bzw. einen zeitlichen Verlauf von Soll-Werten dar, gemäß welchen der jeweilige Schweißprozess durchgeführt werden soll. Insbesondere kann es sich bei den Schweißparametern um elektrische und/oder mechanische Parameter handeln, welche die Bewegung bzw. Bestromung der Schweißelektroden betreffen. Beispielsweise können die Schweißparameter für einen durchzuführenden Schweißprozess in Abhängigkeit von den zu verschweißenden Werkstücken vorgegeben werden. Insbesondere können die Schweißparameter in Form eines sog. Schweißprogramms hinterlegt sein, welches zweckmäßigerweise von einer entsprechenden Schweißsteuerung ausgeführt wird. Typische Schweißparameter sind die der Schweißstrom und die Elektrodenkraft, jeweils als Verlauf in Abhängigkeit von der Zeit.

Ferner werden im Zuge dieser Schweißprozesse jeweils den Schweißprozess beschreibende Schweißdaten bestimmt. Diese Schweißdaten können beispielsweise im Zuge des jeweiligen Schweißprozesses messtechnisch erfasst werden und/oder aus erfassten Messwerten abgeleitet werden. Beispielsweise kann es sich dabei um Ist-Werte handeln, welche im Zuge der Regelung des Schweißprozesses mit vorgegebenen Soll-Werten abgeglichen werden. Beispielsweise können als Schweißdaten elektrische Ist- bzw. Messwerte bestimmt werden, z.B. Messwerte für den Schweißstrom und die Schweißspannung, oder auch mechanische bzw. elektromechanische Messwerte bezüglich der Schweißelektroden bzw. des Elektrodenantriebs, beispielsweise ein Drehmoment des Elektrodenantriebs sowie eine Elektrodenkraft oder eine Position oder ein zurückgelegter Weg der Schweißelektroden.

Im Rahmen des vorliegenden Verfahrens wird mittels eines Regressionsmodells eine Auswertung dieser Schweißdaten durchgeführt. Im Zuge dieser Auswertung wird eine Wahrscheinlichkeit bestimmt, mit welcher in einem nächsten Schweißprozess ein Schweißspritzer auftritt, sowie ferner ein Spritzerzeitpunkt, zu welchem der Schweißspritzer in dem nächsten Schweißprozess auftritt bzw. auftreten könnte. Beispielsweise kann eine implizite Wahrscheinlichkeit bestimmt werden, beispielsweise in Form einer binären Ausgabe, insbesondere derart, dass das Auftreten eines Schweißspritzers im nächsten Schweißprozess als wahrscheinlich oder nicht wahrscheinlich bestimmt wird. Ferner kann zweckmäßigerweise eine explizite Wahrscheinlichkeit bestimmt werden, insbesondere als reelle Zahl zwischen 0 und 1 bzw. als prozentualer Wert zwischen 0% und 100%, gemäß welcher ein Schweißspritzer auftreten wird.

Regressionsmodelle bzw. Regressionsanalyse sind statistische Analyseverfahren, um Beziehungen zwischen abhängigen und unabhängigen Variablen zu modellieren und um ferner beispielsweise Zusammenhänge quantitativ zu beschreiben oder Werte der abhängigen Variablen zu prognostizieren. Somit werden im Rahmen des vorliegenden Verfahrens die gesammelten Schweißdaten mittels Regressionsanalyse ausgewertet, um ein zukünftiges Verhalten bei einem nächsten durchzuführenden Schweißprozess vorhersagen zu können. Als Schweißspritzer seien in diesem Zusammenhang Tropfen geschmolzenen Metalls zu verstehen, die aufgrund der extremen Intensität von Hitze und Kraft, die an oder um den Schweißpunkt herum aufgebracht werden, ausbrechen.

Das Regressionsmodell kann insbesondere anhand von Trainingsdaten trainiert werden, beispielsweise anhand von Archivdaten, welche im Zuge von in der Vergangenheit durchgeführten Schweißprozessen gesammelt wurden. Insbesondere weist eine Vielzahl dieser Archivdaten bzw. der entsprechenden durchgeführten Schweißprozesse Merkmale bzw. Muster auf, die auf einen Schweißspritzer hindeuten. Beispielsweise kann das Regressionsmodell interne und externe unabhängige Variablen umfassen. Derartige interne unabhängige Variablen können beispielsweise Gewichte bzw. Gewichtungen sein, welche in einer Trainingsphase anhand der Trainingsdaten bestimmt werden. Derartige externe unabhängige Variablen können beispielsweise Schweißparameter x sein, die aus den Archivdaten bzw. den durchgeführten Schweißungen ermittelt werden. Nach dieser Trainingsphase sind die Gewichtungen insbesondere fest vorgegeben. Beim Anwenden des Regressionsmodells auf die aktuellen Schweißdaten können dem Modell insbesondere neue Schweißparameter x zugeführt werden. Eine Ausgabe des Modells kann y(x) und/oder t(x) sein, wobei y die Spritzerwahrscheinlichkeit ist und t der Spritzerzeitpunkt ist.

Das Regressionsmodell kann insbesondere dahingehend trainiert werden, dass es einen entsprechenden Zusammenhang von Messwerten, Eigenschaften und Signalen aus vorhergehenden Schweißungen und dem Auftreten eines Schweißspritzers bei einem nachfolgenden Schweißpunkt erlernt. Das Regressionsmodell kann sich zweckmäßigerweise Eigenschaften aus vorhergehenden Schweißpunkten bzw. Schweißdaten merken und für den nächsten Schweißpunkt bzw. die nächsten Schweißdaten ausnutzen. Erkennt das Regressionsmodell anhand der aktuellen Schweißdaten, dass ein Schweißspritzer im nächsten Schweißprozess wahrscheinlich ist, gibt das Model beispielsweise als Ausgabe die entsprechende Wahrscheinlichkeit sowie ferner insbesondere den geschätzten Zeitpunkt des Auftretens aus.

Wenn die bestimmte Wahrscheinlichkeit einen (insbesondere vom Benutzer vorgebbaren) Schwellwert erreicht, wird mittels des Regressionsmodells eine Anpassung von wenigstens einem der vorgegebenen Schweißparameter durchgeführt. Im Zuge dieser Anpassung wird mittels des Regressionsmodells ein Zusammenhang zwischen der Wahrscheinlichkeit und/oder dem Spritzerzeitpunkt als abhängige Variablen einerseits und den Schweißparametern als unabhängige Variablen andererseits ermittelt. Anhand dessen kann dann entschieden werden, welche(r) der Schweißparameter in welcher Weise verändert werden sollte(n), um das Auftreten des Schweißspritzers zu vermeiden.

Insbesondere kann zu diesem Zweck ein Optimierungsverfahren durchgeführt werden. Die Wahrscheinlichkeit und/oder der Spritzerzeitpunkt können dabei als eine zu optimierende Größe verwendet werden, d.h. die Ausgabe des Modells (z.B. y(x), t(x)) kann in eine Zielfunktion für das Optimierungsverfahren umgewandelt werden. Der bzw. die entsprechenden Schweißparameter werden zweckmäßigerweise derart angepasst, dass die Wahrscheinlichkeit möglichst gering wird und beispielsweise unterhalb des Schwellwerts fällt, und/oder derart, dass der Spritzerzeitpunkt so weit wie möglich nach hinten verschoben wird und insbesondere nach dem Ende des nächsten Schweißprozesses liegt.

Vorzugsweise kann anhand des ermittelten wenigstens einen Zusammenhangs auch ein Maß für einen Einfluss des wenigstens einen der vorgegebenen Schweißparameter auf die Wahrscheinlichkeit und/oder den Spritzerzeitpunkt bestimmt werden. Dies kann dementsprechend dazu herangezogen werden, zu entscheiden, welcher Schweißparameter wie verändert werden sollte, um das Auftreten des Schweißspritzers am sichersten zu verhindern. Beispielsweise können die Zusammenhänge funktional analysiert werden, um beispielsweise einen Gradienten zu ermitteln. Dieser Gradient gibt dann ein Maß für den Einfluss eines Schweißparameters auf das Auftreten eines Schweißspritzers bzw. den Spritzerzeitpunkt an.

Abhängig von der Auswertung der Schweißdaten werden somit einer oder mehrere Schweißparameter für den nächsten durchzuführenden Schweißprozess derart angepasst, dass es in diesem nächsten Schweißprozess möglichst nicht zum Auftreten des vorhergesagten Schweißspritzers kommt.

Schweißspritzer können die Schweißqualität negativ beeinflussen und zur Verschmutzung von metallischen Oberflächen führen, insbesondere den Werkstückoberflächen und den Oberflächen des Schweißgeräts selbst, beispielsweise den Elektrodenkappen. Daher ist es von Bedeutung, Schweißspritzern und deren negativen Einflüssen entgegenwirken zu können. Durch das vorliegende Verfahren kann das Auftreten derartiger Schweißspritzer durch adaptives, automatisiertes Anpassen der Schweißparameter reduziert werden. Eine manuelle Anpassung kann zweckmäßigerweise entfallen. Ferner können durch übermäßiges Spritzerauftreten verursachte sog. Q-Stopps, also Linienstopps aufgrund von Qualitätsproblemen, vermieden werden.

Auf herkömmliche Weise werden Schweißprogramme, bei welchen häufig Schweißspritzer auftreten, zumeist manuell neu parametriert, meist mit einem geringeren Strom zu bestimmten Zeitpunkten im Schweißablauf. Weil Spritzer eine Materialaustreibung aus der Schweißlinse darstellen, sorgen Schweißgeräte mit UIR-Regelung dafür, dass die Schweißzeit verlängert wird, um die Schweißlinse wiederaufzubauen und um die Punktqualität zu gewährleisten. Jedoch wird dabei die Schweißdauer eines spritzenden Punkts verlängert, was dazu führen kann, dass ein Ablauf auf einer Fertigungsstraße langsamer vonstattengeht. Im Gegensatz dazu können erfindungsgemäß, durch statistisches Auswerten der Schweißdaten, die Schweißparameter automatisiert angepasst werden, um bei zukünftigen Schweißprozessen das Auftreten von Schweißspritzern zu reduzieren oder möglichst zu vermeiden. Qualität und Effektivität der durchgeführten Schweißprozesse können somit erhöht werden.

Es kann vorgesehen sein, den bzw. die Schweißparameter abhängig von dem prognostizierten Spritzerzeitpunkt unterschiedlich stark zu verändern, damit es zu diesem Zeitpunkt nicht zum Auftreten des Schweißspritzers kommt. Je nach konkretem Spritzerzeitpunkt kann die Veränderung stärker oder schwächer ausfallen. Wird das Auftreten des Schweißspritzers zu einem vergleichsweise frühen Spritzerzeitpunkt prognostiziert, wird der Schweißparameter zweckmäßigerweise vergleichsweise stark verändert. Wird der Schweißspritzer hingegen für einen vergleichsweise späten Zeitpunkt vorhergesagt, reicht insbesondere eine weniger starke Anpassung der Schweißparameter aus, um den Spritzer zu verhindern.

Gemäß einer besonders bevorzugten Ausführungsform wird der wenigstens eine der vorgegebenen Schweißparameter mit Hilfe eines Gradientenverfahrens angepasst. Gradientenverfahren, im Englischen auch als "Gradient Descent" bezeichnet, sind numerische Verfahren zum Lösen von Optimierungsproblemen. Dabei wird im Allgemeinen von einem Startpunkt aus in eine Abstiegsrichtung geschritten, bis keine numerische Verbesserung mehr erzielt wird. Somit wird insbesondere ein Gradient als Maß für den Einfluss eines Schweißparameters auf das Schweißspritzerauftreten bzw. den Spritzerzeitpunkt bestimmt. Mit dem Gradientenverfahren werden insbesondere alle Eingaben des Regresssionsmodells optimiert, die einen Beitrag zu diesem Gradienten besitzen. Wenn beispielsweise dem Regressionsmodell aktuelle Schweißparameter x zugeführt werden und das Modell als Ausgabe die Wahrscheinlichkeit y(x) ausgibt, kann diese Ausgabe y(x) in eine Zielfunktion für das Gradientenverfahren umgewandelt werden. Beispielsweise kann diese Zielfunktion als Q(x) = y²(x) gewählt werden. Ein symbolischer Gradient könnte als Ableitung von dQ nach dx bestimmt werden: Q'(x) = 2y(x)*y'(x). Somit kann das Gradientenverfahren beispielsweise angewendet werden, um einen Satz von Schweißparametern x* auf der Hyperfläche Q zu finden, die einem Minimum entsprechen.

Dieser Satz von optimalen Schweißparametern x* kann für den nächsten Schweißprozess zurück in die Steuerung als Satz von Schweißparametern für die anstehende folgende Schweißung vorgegeben werden.

Gemäß einer besonders vorteilhaften Ausführungsform wird das Regressionsmodell als künstliches neuronales Netzwerk implementiert, insbesondere als rekurrentes künstliches neuronales Netzwerk. Ein derartiges neuronale Netzwerk bzw. künstliches neuronales Netzwerk (engl. "artificial neural network", ANN) besteht typischerweise aus in mehreren Schichten angeordneten Knoten, den sogenannten (künstlichen) Neuronen, und gerichteten Kanten, die die Knoten/Neuronen verbinden. Die Ausgabe eines Knotens ist insbesondere eine Funktion der gewichteten Eingaben an diesen Knoten (Ein- und Ausgabe sind durch die Richtung der gerichteten Kanten spezifiziert) sowie einer Aktivierungsfunktion. Spezifischer ist die Ausgabe insbesondere eine Funktion der gewichteten Summe der Eingaben, wobei die Gewichte den Kanten zugeordnet sind. Bei einem neuronalen Netzwerk nach dem sog. "feedforward" Prinzip werden Neuronenausgaben insbesondere nur in eine Verarbeitungsrichtung geleitet und können nicht durch Kanten zurückgeführt werden. Insbesondere besitzen derartige neuronale "feedforward" Netzwerke daher nur zumeist lediglich eine Ausgabeschicht.

Insbesondere kann im Rahmen des vorliegenden Verhaftens auch ein rekurrentes bzw. rückgekoppeltes neuronales Netzwerk verwendet werden, bei welchen Neuronenausgaben auch in verschiedene Verarbeitungsrichtung geleitet werden können. So können Ausgaben von Neuronen durch spezielle rekurrente Kanten zurückgeführt werden. In rekurrenten neuronalen Netzwerken können Neuronen einer Schicht daher auch mit Neuronen derselben oder einer vorangegangenen Schicht verbunden sein.

Besonders zweckmäßig wird durch das neuronale Netzwerk ein maschinelles Lernen ermöglicht. Das neuronale Netzwerk kann anhand von Trainingsdaten trainiert werden, um automatisch und selbstständig die Auswertung und bei Bedarf die Anpassung der Schweißparameter vorzunehmen. Bekanntermaßen kann das Training eines neuronalen Netzwerks derart erfolgen, dass Parameter bzw. Gewichte des neuronalen Netzwerks so angepasst werden, dass ein Fehler bezüglich einer gegebenen Fehlerfunktion minimiert wird, wenn das neuronale Netzwerk auf die Trainingsdaten angewandt wird. Die Schweißdaten dienen zweckmäßigerweise als Eingabewerte, die an Eingangsneuronen des neuronalen Netzwerks eingegeben werden können. Das neuronale Netz kann insbesondere derart trainiert werden, dass es an Ausgabeneuronen als Ausgabe die Wahrscheinlichkeit und den Spritzerzeitpunkt bereitstellt.

Bevorzugt umfassen die Schweißdaten eine Vielzahl verschiedener physikalischer Größen. Durch die Verwendung eines Regressionsmodells muss insbesondere nicht der Anwender auswählen, welche Daten in die Analyse einfließen sollen. Vielmehr können alle vorhandenen Daten zugeführt werden und das Modell "erkennt" selbst, welche Parameter welchen Einfluss auf das Ergebnis haben.

Das vorliegende Verfahren ermöglicht es somit besonders vorteilhaft, automatisch zu erkennen, welche physikalischen Größen zur effektivsten Verbesserung führen und in welchem Umfang diese geändert werden sollen. Im Rahmen des Verfahrens wird zweckmäßigerweise automatisch und selbstständig bewertet und entschieden, insbesondere durch das neuronale Netzwerk bzw. durch das Regressionsmodell, welches von dem neuronalen Netzwerk gebildet wird, welche der Schweißdaten eine möglichst präzise Vorhersage über den nächsten Schweißprozess ermöglichen und ferner welche der Schweißparameter in welcher Weise für eine möglichst effektive Verhinderung vorhergesagter Schweißspritzer verändert werden.

Besonders bevorzugt umfassen die Schweißparameter und/oder die Schweißdaten jeweils eine Elektrodenkraft und/oder eine Position der Schweißelektroden und/oder einen Schweißstrom und/oder eine Schweißspannung und/oder eine Schweißzeit und/oder einen zeitlichen Verlauf einer Elektrodenkraft und/oder einen zeitlichen Verlauf einer Position der Schweißelektroden und/oder einen zeitlichen Verlauf einer Schweißstromstärke und/oder einen zeitlichen Verlauf einer Schweißspannung. Die anzupassenden Schweißparameter bzw. die auszuwertenden Schweißdaten betreffen somit jeweils zweckmäßigerweise mechanische sowie elektrische Größen bzw. deren zeitliche Verläufe.

Besonders vorteilhaft eignet sich das Verfahren für den Karosserierohbau, insbesondere für automatisierte Schweißprozesse im Karosserierohbau, vorzugsweise im Zuge einer Kraftfahrzeugproduktion. Insbesondere werden dabei Bleche miteinander verschweißt, um die Karosserie eines Kraftfahrzeugs herzustellen. Im Zuge des Herstellungsprozesses einer einzigen Karosserie können bis zu mehrere tausend Schweißpunkte (z.B. ca. 5.000 Schweißpunkte für ein Mittelklasse-Fahrzeug) automatisiert bearbeitet werden. Durch das Verfahren können die einzelnen Schweißpunkte mit bestmöglicher Qualität verschweißt werden.

Eine erfindungsgemäße Steuereinheit (Recheneinheit), z.B. eine Schweißsteuerung eines Schweißgeräts, ist, insbesondere programmtechnisch, dazu eingerichtet, ein erfindungsgemäßes Verfahren durchzuführen. Die Steuereinheit bzw. Schweißsteuerung kann beispielsweise als SPS (speicherprogrammierbare Steuerung), als NC (Numerical Control) oder CNC (Computerised Numerical Control) ausgebildet sein.

Ein erfindungsgemäßes Schweißgerät zum Widerstandsschweißen weist insbesondere eine Schweißzange mit Schweißelektroden sowie einen Elektrodenantrieb zum Bewegen der Schweißelektroden auf. Insbesondere kann auch ein Roboter vorgesehen sein, um die Schweißzange anzusteuern, beispielsweise im Falle einer pneumatischen Schweißzange. Ferner umfasst das Schweißgerät eine bevorzugte Ausgestaltung einer erfindungsgemäßen Steuereinheit.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Figur 1: zeigt schematisch eine bevorzugte Ausgestaltung eines erfindungsgemäßen Schweißgeräts, das dazu eingerichtet ist, eine bevorzugte Ausführungsform eines erfindungsgemäßen Verfahrens durchzuführen.
- Figur 2: zeigt schematisch eine bevorzugte Ausführungsform eines erfindungsgemäßen Verfahrens als ein Blockdiagramm.

### Detaillierte Beschreibung der Zeichnung

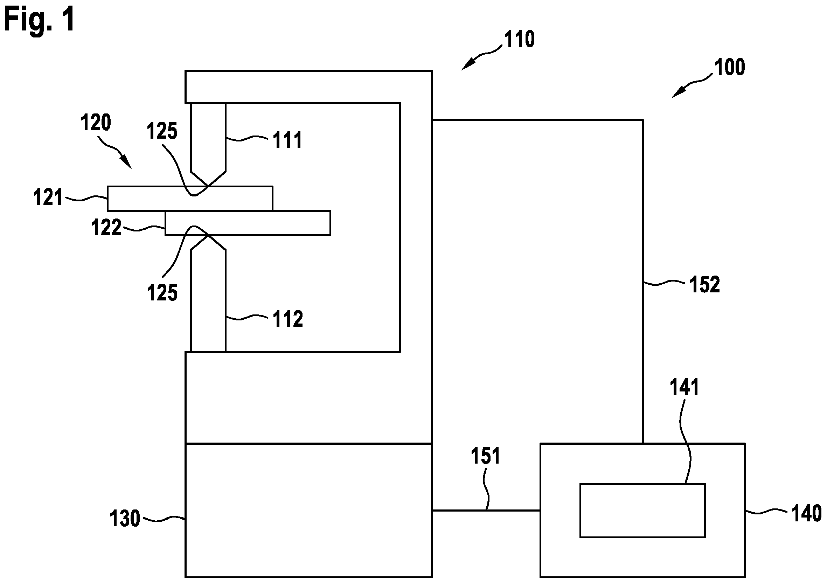

In Figur 1 ist ein Schweißgerät zum Widerstandsschweißen schematisch dargestellt und mit 100 bezeichnet.

Mit dem Schweißgerät 100 können Werkstücke 120 durch Widerstandsschweißen miteinander stoffschlüssig verbunden werden. Insbesondere werden die Werkstücke 120 im Zuge eines Karosserierohbaus miteinander verschweißt, wobei insbesondere eine Karosserie eines Kraftfahrzeugs hergestellt wird. Als Werkstücke werden hier beispielsweise zwei Bleche 121 und 122 aus Aluminium miteinander verschweißt.

Das Schweißgerät 100 weist eine Schweißzange 110 mit zwei Schweißelektroden 111 und 112 auf. Ein Elektrodenantrieb 130 ist vorgesehen, um die Schweißelektroden 111, 112 zu bewegen. In Figur 1 ist die Schweißzange 110 beispielsweise als eine servoelektrische Schweißzange dargestellt mit einem als Servomotor ausgebildeten Elektrodenantrieb 130. Ebenso ist es denkbar, dass der Elektrodenantrieb 130 beispielsweise als Elektromotor, Hydraulikmotor oder Pneumatikmotor ausgebildet sein kann.

Im Zuge des Widerstandsschweißprozesses werden während einer sog. Kraftaufbauphase die Schweißelektroden 111 und 112 mit Hilfe des Elektrodenantriebs 130 mit einer Elektrodenkraft an einem Schweißpunkt 125 gegen die Bleche 121 und 122 gedrückt. Anschließend werden die Schweißelektroden 111 und 112 während des eigentlichen Schweißprozesses für die Dauer einer Schweißzeit mit einem Schweißstrom bestromt, wodurch eine Widerstandserwärmung der Bleche 121 und 122 am Schweißpunkt 125 erfolgt und es zu einem Verflüssigen der Oberfläche der Werkstücke 121, 122 kommt.

Ferner weist das Schweißgerät 100 eine Steuereinheit (Schweißsteuerung) 140 auf, welche beispielsweise als SPS (speicherprogrammierbare Steuerung) ausgebildet sein kann. Die Steuereinheit 140 ist dazu eingerichtet, den Elektrodenantrieb 130 und die Schweißzange 110 anzusteuern, angedeutet durch die Bezugszeichen 151 und 152, und um somit den Schweißprozess zu regeln. Zu diesem Zweck wird in der Steuereinheit 140 ein entsprechendes Steuerungsprogramm bzw. Schweißprogramm 141 ausgeführt, durch welches Elektrodenantrieb 130 und Schweißzange 110 gemäß vorgegebenen Schweißparametern angesteuert werden. Diese Schweißparameter können beispielsweise einen zeitlichen Verlauf einer Elektrodenkraft sowie eines Schweißstroms umfassen.

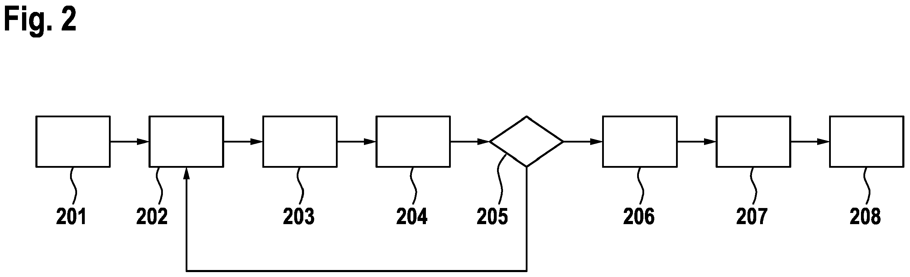

Die Steuereinheit 140 ist ferner dazu eingerichtet, gesammelte Mess- bzw. Schweißdaten bisheriger Schweißprozesse dahingehend auszuwerten, ob in einem nächsten Schweißprozess ein Schweißspritzer auftreten könnte und gegebenenfalls Schweißparameter anzupassen, um derartige Schweißspritzer zu verhindern. Zu diesem Zweck ist die Steuereinheit 140, insbesondere programmtechnisch, dazu eingerichtet, eine bevorzugte Ausführungsform eines erfindungsgemäßen Verfahrens durchzuführen, welches in Figur 2 schematisch als ein Blockdiagramm dargestellt ist und nachfolgend erläutert wird.

Zum Auswerten von Schweißdaten und zum Anpassen von Schweißparametern ist ein künstliches neuronales Netzwerk vorgesehen, insbesondere ein rekurrentes neuronales Netzwerk, welches zweckmäßigerweise ein Regressionsverfahren durchführt bzw. ein Regressionsmodell bildet. In einem Schritt 201 wird das neuronale Netzwerk zunächst trainiert, insbesondere anhand entsprechender Trainingsdaten, beispielsweise anhand von Archivdaten bezüglich in der Vergangenheit durchgeführter Schweißprozesse.

Nachdem das neuronale Netzwerk trainiert wurde, werden im regulären Betrieb in Schritt 202 Schweißprozesse gemäß vorgegebener Schweißparameter durchgeführt. Ferner werden Schweißdaten bezüglich der Schweißprozesse gesammelt. Bei den Schweißparametern und den Schweißdaten kann es sich beispielsweise um Soll- bzw. Ist-Werte physikalischer Größen handeln, beispielsweise einer Elektrodenkraft, einer Position der Schweißelektroden, eines Schweißstroms, einer Schweißspannung, einer Schweißzeit sowie eines zeitlichen Verlaufs der Elektrodenkraft, der Schweißelektrodenposition, der Schweißstromstärke und der Schweißspannung.

In Schritt 203 führt das neuronale Netzwerk mittels des Regressionsmodells eine Auswertung der gesammelten Schweißdaten durch, insbesondere um das Auftreten eines Schweißspritzers in einem nächsten Schweißprozess bewerten zu können.

In Schritt 204 stellt das neuronale Netzwerk als Ergebnis der Auswertung eine Wahrscheinlichkeit bereit, mit welcher ein Schweißspritzer in dem nächsten Schweißprozess auftreten wird, sowie ferner einen Zeitpunkt, zu welchem der Schweißspritzer in diesem nächsten Schweißprozess auftreten könnte.

In Schritt 205 wird überprüft, ob die bestimmte Wahrscheinlichkeit über einem insbesondere von einem Anwender vorgebbaren Grenz- bzw. Schwellwert liegt. Beispielsweise kann der Schwellwert als 10% oder beispielsweise auch als 25% vorgegeben werden. Wenn der Schwellwert nicht erreicht wird, ist die Wahrscheinlichkeit für das Auftreten zu gering, so dass keine Anpassung der Schweißparameter durchgeführt wird. In diesem Fall wird der nächste Schweißprozess gemäß Schritt 202 mit den aktuellen vorgegebenen Schweißparametern durchgeführt.

Wird der Schwellwert hingegen erreicht bzw. überschritten, dann wird in den Schritten 206 und 207 eine Anpassung der Schweißparameter durchgeführt, insbesondere mit Hilfe eines Gradientenverfahrens bzw. eines "Gradient Descent" Verfahrens, um das Auftreten des vorhergesagten Schweißspritzers verhindern zu können. Dabei wird im Zuge des Gradientenverfahrens selbstständig und automatisch ausgewählt, welche der Schweißparameter bzw. der entsprechenden physikalischen Größen zur Vermeidung des Schweißspritzers in welcher Weise angepasst werden. Beispielsweise können im Zuge des Gradientenverfahrens der Schweißstrom und die Schweißspannung sowie deren zeitlichen Verläufe als Schweißparameter für die Anpassung ausgewählt werden.

In Schritt 206 wird ein Schweißparameter in Abhängigkeit von seinem Einfluss auf das Ergebnis für eine Anpassung ausgewählt. Beispielsweise kann für alle Schweißparameter jeweils ein Maß des Einflusses des Parameters auf das Ergebnis, beispielsweise einen Gradienten, bestimmt werden.

In Schritt 207 wird ein neuer Parametersatz bestimmt, für den die Wahrscheinlichkeit des Auftretens eines Schweißspritzers unter der Schwelle liegt. Zu diesem Zweck werden die entsprechenden Schweißparameter im Zuge des Gradientenverfahrens insbesondere derart optimiert, dass die Wahrscheinlichkeit auf einen Wert unterhalb des Schwellwerts verringert werden kann.

In Schritt 208 wird daraufhin der nächste Schweißprozess mit den veränderten Parametern durchgeführt, um das Auftreten des vorhergesagten Schweißspritzers zu verhindern.

Im Rahmen der Erfindung werden basierend auf einem Regressionsmodell die Spritzerwahrscheinlichkeit und der Spritzerzeitpunkt für den nächsten Schweißpunkt vorhergesagt. Wenn die vom Regressionsmodell geschätzte Wahrscheinlichkeit für das Auftreten eines Spritzers für die nächste Schweißung oberhalb eines (z.B. vom Anwender) definierten Grenzwertes liegt, werden die Schweißparameter für den nächsten Schweißpunkt automatisch angepasst, insbesondere mit Hilfe eines Gradientenverfahrens, vorzugsweise ohne die Punktqualität einzuschränken. Das Regressionsmodell basiert besonders vorteilhaft auf rekurrenten, neuronalen Netzwerken und erkennt selbst, welche der Eingabegrößen hinsichtlich ihrer Ausgaben bzw. Zielwerte zu berücksichtigen sind. Dem Modell können insbesondere sämtliche protokollierte Schweißdaten aus der Schweißsteuerung zugeführt werden, z.B. Zeitreihen aus Referenz- und/oder Ist-Kurven, verwendete Schweißparameter einer Schweißung und abgeleitete Daten wie die Zeitspanne zwischen den einzelnen Schweißungen. Ausgaben des Modells können zweckmäßigerweise die Spritzerwahrscheinlichkeit und der Spritzerzeitpunkt sein, deren Abhängigkeit von den Eingabegrößen ermittelt wird. Mit diesem Zusammenhang werden die Schweißparameter automatisch angepasst, insbesondere mit Hilfe eines Gradientenverfahrens, um die Wahrscheinlichkeit für das Auftreten von Spritzern zu minimieren.

## Patentansprüche

1. Verfahren zum Widerstandsschweißen, wobei Schweißprozesse durchgeführt werden (202), im Zuge derer jeweils gemäß vorgegebenen Schweißparametern Schweißelektroden (111, 112) gegen einen Schweißpunkt (125) von Werkstücken (121, 122) gepresst und mit einem Schweißstrom bestromt werden, wobei im Zuge dieser Schweißprozesse jeweils den Schweißprozess beschreibende Schweißdaten bestimmt werden (202), wobei mittels eines Regressionsmodells eine Auswertung der Schweißdaten durchgeführt wird (203), wobei im Zuge dieser Auswertung eine Wahrscheinlichkeit, mit welcher in einem nächsten Schweißprozess ein Schweißspritzer auftritt, und ferner ein Spritzerzeitpunkt, zu welchem der Schweißspritzer in dem nächsten Schweißprozess auftritt, bestimmt werden (204), wobei, wenn die bestimmte Wahrscheinlichkeit einen Schwellwert erreicht (205), eine Anpassung von wenigstens einem der vorgegebenen Schweißparameter durchgeführt wird, damit die Wahrscheinlichkeit unterhalb des Schwellwerts fällt (206), wobei im Zuge dieser Anpassung mittels des Regressionsmodells wenigstens ein Zusammenhang zwischen der Wahrscheinlichkeit und/oder dem Spritzerzeitpunkt als abhängige Variable einerseits und dem wenigstens einen der Schweißparameter als unabhängige Variable andererseits ermittelt wird,
wobei anhand des ermittelten wenigstens einen Zusammenhangs der wenigstens eine der vorgegebenen Schweißparameter ausgewählt und angepasst wird.

2. Verfahren nach Anspruch 1, wobei anhand des ermittelten wenigstens einen Zusammenhangs ein Maß für einen Einfluss des wenigstens einen der vorgegebenen Schweißparameter auf die Wahrscheinlichkeit und/oder den Spritzerzeitpunkt bestimmt wird.

3. Verfahren nach Anspruch 1 oder 2, wobei der wenigstens eine der vorgegebenen Schweißparameter mit Hilfe eines Gradientenverfahrens angepasst wird

4. Verfahren nach einem der vorstehenden Ansprüche, wobei das Regressionsmodell als künstliches neuronales Netzwerk, insbesondere rekurrentes künstliches neuronales Netzwerk, implementiert wird.

5. Verfahren nach einem der vorstehenden Ansprüche, wobei die Schweißparameter und/oder die Schweißdaten jeweils eine oder mehrere der nachfolgenden physikalischen Großen umfassen:
- eine Elektrodenkraft,
- eine Position der Schweißelektroden (111, 112),
- einen Schweißstrom,
- eine Schweißspannung,
- eine Schweißzeit,
- einen zeitlichen Verlauf einer Elektrodenkraft,
- einen zeitlichen Verlauf einer Position der Schweißelektroden (111, 112),
- einen zeitlichen Verlauf einer Schweißstromstärke, und
- einen zeitlichen Verlauf einer Schweißspannung.

6. Steuereinheit (140), die dazu eingerichtet ist, im Zuge der mit einem Schweißgerät (100) durchgeführten Schweißprozessen jeweils den Schweißprozess beschreibende Schweißdaten zu erfassen, und das Schweißgerät (100) mit Schweißelektroden (111, 112) und mit einem Elektrodenantrieb (130) zum Bewegen der Schweißelektroden (111, 112) so anzusteuern, dass ein Verfahren nach einem der vorstehenden Ansprüche durchgeführt wird.

7. Schweißgerät (100) mit Schweißelektroden (111, 112), mit einem Elektrodenantrieb (130) zum Bewegen der Schweißelektroden (111, 112) und mit einer Steuereinheit (140) nach Anspruch 6.

8. Computerprogramm, das die Steuereinheit (140) eines Schweißgeräts (100) nach Anspruch 7 veranlasst, das Schweißgerät (100) so anzusteuern, dass im Zuge der mit einem Schweißgerät (100) durchgeführten Schweißprozessen jeweils den Schweißprozess beschreibende Schweißdaten vom Schweißgerät (100) erfasst werden, und dass es ein Verfahren nach einem der Ansprüche 1 bis 5 durchführt, wenn es auf der Steuereinheit (140) ausgeführt wird.

9. Maschinenlesbares Speichermedium mit einem darauf gespeicherten Computerprogramm nach Anspruch 8.

## Claims

1. Resistance welding method, wherein welding processes are performed (202), in the course of which welding electrodes (111, 112) are pressed against a welding point (125) of workpieces (121, 122) and are energized with a welding current in each case in accordance with predefined welding parameters, wherein, in the course of these welding processes, welding data describing the respective welding process are determined (202), wherein the welding data are evaluated (203) using a regression model, wherein, in the course of this evaluation, a probability of welding spatter occurring in a next welding process, and also a spatter time at which the welding spatter occurs in the next welding process, are determined (204), wherein, when the determined probability reaches a threshold value (205), at least one of the predefined welding parameters is adjusted so that the probability falls below the threshold value (206), wherein, in the course of this adjustment, at least one relationship between the probability and/or the spatter time, as dependent variable, on the one hand, and the at least one of the welding parameters, as independent variable, on the other hand, is ascertained using the regression model,
wherein the at least one of the predefined welding parameters is selected and adjusted based on the ascertained at least one relationship.

2. Method according to Claim 1, wherein a measure of an influence of the at least one of the predefined welding parameters on the probability and/or the spatter time is determined based on the ascertained at least one relationship.

3. Method according to Claim 1 or 2, wherein the at least one of the predefined welding parameters is adjusted using a gradient method.

4. Method according to one of the preceding claims, wherein the regression model is implemented as an artificial neural network, in particular a recurrent artificial neural network.

5. Method according to one of the preceding claims, wherein the welding parameters and/or the welding data each comprise one or more of the following physical variables:
- an electrode force,
- a position of the welding electrodes (111, 112),
- a welding current,
- a welding voltage,
- a welding time,
- a temporal profile of an electrode force,
- a temporal profile of a position of the welding electrodes (111, 112),
- a temporal profile of a welding current strength, and
- a temporal profile of a welding voltage.

6. Control unit (140) that is configured, in the course of the welding processes performed with a welding device (100), to acquire welding data describing the respective welding process, and to actuate the welding device (100) with welding electrodes (111, 112) and with an electrode drive (130) so as to move the welding electrodes (111, 112) such that a method according to one of the preceding claims is performed.

7. Welding device (100) with welding electrodes (111, 112), with an electrode drive (130) for moving the welding electrodes (111, 112) and with a control unit (140) according to Claim 6.

8. Computer program that prompts the control unit (140) of a welding device (100) according to Claim 7 to actuate the welding device (100) such that, in the course of the welding processes performed with a welding device (100), welding data describing the respective welding process are captured from the welding device (100), and that it performs a method according to one of Claims 1 to 5 when it is executed on the control unit (140).

9. Machine-readable storage medium with a computer program according to Claim 8 stored thereon.

## Revendications

1. Procédé de soudage par résistance,
dans lequel sont exécutés (202) des processus de soudage au cours desquels des électrodes de soudage (111, 112) sont respectivement pressées contre un point de soudage (125) de pièces (121, 122) conformément à des paramètres de soudage prédéfinis et sont alimentées avec un courant de soudage, dans lequel, au cours desdits processus de soudage, des données de soudage décrivant respectivement le processus de soudage sont déterminées (202), dans lequel une évaluation des données de soudage est effectuée au moyen d'un modèle de régression (203), dans lequel, au cours de ladite évaluation, une probabilité avec laquelle une projection de soudure apparaît dans un processus de soudage suivant et, en outre, un instant de projection auquel la projection de soudure apparaît dans le processus de soudage suivant, sont déterminés (204), dans lequel, lorsque la probabilité déterminée atteint une valeur de seuil (205), un ajustement d'au moins l'un des paramètres de soudage prédéfinis est effectué afin que la probabilité s'abaisse en dessous de la valeur de seuil (206), dans lequel, au cours dudit ajustement, au moins une relation est déterminée au moyen du modèle de régression entre la probabilité et/ou l'instant de projection en tant que variable dépendante, d'une part, et au moins l'un des paramètres de soudage en tant que variable indépendante, d'autre part,
dans lequel ledit au moins un des paramètres de soudage prédéfinis est sélectionné et ajusté sur la base de ladite au moins une relation déterminée.

2. Procédé selon la revendication 1, dans lequel une mesure d'une influence dudit au moins un des paramètres de soudage prédéfinis sur la probabilité et/ou l'instant de projection est déterminée sur la base de ladite au moins une relation déterminée.

3. Procédé selon la revendication 1 ou 2, dans lequel ledit au moins un des paramètres de soudage prédéfinis est ajusté à l'aide d'un procédé de gradient.

4. Procédé selon l'une quelconque des revendications précédentes, dans lequel le modèle de régression est mis en œuvre sous la forme d'un réseau neuronal artificiel, en particulier d'un réseau neuronal artificiel récurrent.

5. Procédé selon l'une quelconque des revendications précédentes, dans lequel les paramètres de soudage et/ou les données de soudage comprennent respectivement une ou plusieurs des grandeurs physiques suivantes :
- une force d'électrode,
- une position des électrodes de soudage (111, 112),
- un courant de soudage,
- une tension de soudage,
- un temps de soudage,
- une variation temporelle d'une force d'électrode,
- une variation temporelle d'une position des électrodes de soudage (111, 112),
- une variation temporelle d'une intensité du courant de soudage, et
- une variation temporelle d'une tension de soudage.

6. Unité de commande (140) conçue pour détecter, au cours des processus de soudage réalisés au moyen d'un appareil de soudage (100), des données de soudage décrivant respectivement le processus de soudage, et pour commander l'appareil de soudage (100) au moyen d'électrodes de soudage (111, 112) et d'un dispositif d'entraînement d'électrodes (130) destiné à déplacer les électrodes de soudage (111, 112) de manière à mettre en œuvre un procédé selon l'une quelconque des revendications précédentes.

7. Appareil de soudage (100) comportant des électrodes de soudage (111, 112), un dispositif d'entraînement d'électrodes (130) destiné à déplacer les électrodes de soudage (111, 112) et une unité de commande (140) selon la revendication 6.

8. Programme informatique qui amène l'unité de commande (140) d'un appareil de soudage (100) selon la revendication 7 à commander l'appareil de soudage (100) de manière à ce que, au cours des processus de soudage réalisés au moyen d'un appareil de soudage (100), des données de soudage décrivant respectivement le processus de soudage soient détectées par l'appareil de soudage (100), et à ce qu'il mette en œuvre un procédé selon l'une quelconque des revendications 1 à 5, lorsqu'il est exécuté sur l'unité de commande (140).

9. Support de stockage lisible par machine sur lequel est stocké un programme informatique selon la revendication 8.
